# EUROPÄISCHE PATENTANMELDUNG

(11) **EP 2 833 259 A1**
(43) Veröffentlichungstag der Anmeldung: **04.02.2015**
(21) Anmeldenummer: 13178890.3
(22) Anmeldetag: 01.08.2013
(51) Int. Cl.: G06F 9/44

(54) **Verfahren und Editor zur Erstellung einer Benutzeroberfläche eines Bedien- und Beobachtungsgerätes einer industriellen Automatisierungsanordnung**

(71) Anmelder: Siemens Aktiengesellschaft, 80333 München (DE)
(72) Erfinder: Langguth, Karlheinz, 90766 Fürth (DE); Sui, Qingchuan, 91058 Erlangen (DE); Thurner, Elmar, 90491 Nürnberg (DE)

(57) **Zusammenfassung**

Die Erfindung betrifft ein Verfahren zur Erstellung einer Benutzeroberfläche (BO2A, BO2B) eines Bedien- und Beobachtungsgerätes einer industriellen Automatisierungsanordnung, wobei aus Projektierungsdaten der Automatisierungsanordnung automatisch Objekte für das Bedienen und Beobachten der Automatisierungsanordnung ausgewählt und auf einer Anzeigeseite der Benutzeroberfläche (AG1) angeordnet werden, wonach zumindest eines dieser der Objekte der durch eine manuelle Bedienprozedur bearbeitet wird, wobei Attribute des zumindest einen Objektes verändert werden. Dabei werden im Zuge einer erneuten Erstellung der Benutzeroberfläche (BO2A, BO2B) aus aktualisierten Projektierungsdaten automatisch neue Objekte ausgewählt, danach wird dasjenige der neuen Objekte identifiziert, welches dem zuvor bearbeiteten zumindest einen Objekt entspricht, danach werden die veränderten Attribute auf das identifizierte Objekt angewendet, wonach die Benutzeroberfläche (BO2A, BO2B) mit diesem Objekt unter Berücksichtigung der veränderten Attribute neu erstellt wird. Dadurch ist es möglich, die manuell vorgenommenen Änderungen mit einer neu automatisch erstellten Konfigurierung der Benutzeroberfläche (AG2) zu verbinden, wodurch manueller Aufwand gespart wird, eine Standardisierung der Benutzeroberflächen (BO1, BO2A, BO2B) unterstützt wird und somit Aufwand und Kosten für die Generierung der Benutzeroberflächen (BO2A, BO2B) reduziert werden.

## Beschreibung

Die Erfindung betrifft ein Verfahren zur Erstellung einer Benutzeroberfläche eines Bedien- und Beobachtungsgerätes einer industriellen Automatisierungsanordnung gemäß dem Oberbegriff des Patentanspruchs 1, und die Erfindung betrifft einen Editor zur Durchführung des Verfahrens gemäß dem Oberbegriff des Patentanspruchs 5.

In der industriellen Automatisierungstechnik und in der Prozessautomatisierung werden Bedien- und Beobachtungsgeräte zur Steuerung und zur Beobachtung automatisierter Prozesse eingesetzt; die Bedien- und Beobachtungsgeräte werden oft auch als Human-Machine-Interfaces (HMI) (oder HMI-Geräte) bezeichnet. Die Bedien- und Beobachtungsgeräte (HMI-Geräte) müssen vor ihrem Einsatz programmiert und konfiguriert werden, wobei insbesondere auch jeweils die Benutzeroberfläche definiert werden muss. Die Benutzeroberfläche besteht dabei in der Regel aus zumindest einer Anzeigeseite, auf der Objekte angeordnet sind. Diese Objekte repräsentieren meist Funktionen, Geräte, Variablen oder andere Instanzen, wobei diese Instanzen entweder tatsächlich vorhandene Geräte oder Anlagenteile sind, alternativ aber auch Messwerte oder dazustellende Informationen sein können. Andere Objekte sind Bedienungsmittel, Eingabefelder, Befehls-Buttons oder dgl.

Die Objekte, die auf einer Benutzeroberfläche angeordnet bzw. visualisiert oder dargestellt werden sollen, entstammen meist sog. Bibliotheken, in denen diese zusammen mit Software-Elementen, die zur Darstellung und Betrieb der betreffenden Objekte benötigt werden, bevorratet sind.

Für die Definition der Benutzeroberflächen der Bedien- und Beobachtungsgeräte werden Software-Werkzeuge eingesetzt, die von einer Bedienperson an einem Computerarbeitsplatz bedient werden. Diese Software-Werkzeuge sollen wegen der Bedienbarkeit durch eine Person im Folgenden auch als "Editor" oder "HMI-Editor" bezeichnet werden. Die Auswahl der Objekte, die auf einer Benutzeroberfläche dargestellt und angeordnet werden sollen, aus der Bibliothek und die Platzierung und Ausgestaltung dieser Objekte wird regelmäßig mittels eines solchen "Editors" bewerkstelligt. Zur Arbeitserleichterung ist es jedoch bekannt, diesen Vorgang zumindest teilweise zu automatisieren. Dazu greift der "Editor" auf eine Projektierungsdatenbank mit Projektierungsdaten der Automatisierungsanordnung zu. Die Projektierungsdaten umfassen neben der Software für die industriellen Automatisierungskomponenten (z.B. PLC's - Programmable Logic Controller oder dgl.) auch umfassende Informationen über die Struktur der Hardware der Automatisierungsanordnung und somit über die enthaltenen Geräte und Komponenten. Aus diesen Projektierungsdaten erstellt ein gebräuchlicher Editor automatisch einen Vorschlag für die Benutzeroberfläche eines Bedien- und Beobachtungsgerätes. Eine solche automatisch generierte Benutzeroberfläche wird jedoch regelmäßig in einem manuellen Bearbeitungsschritt angepasst, weil der automatisch erstellte Vorschlag meist nicht die gewünschte Ergonomie aufweist, dazu einerseits oft nicht alle gewünschten Objekte umfasst, andererseits oft jedoch auch solche Objekte umfasst, die nicht gewünscht sind. Dies bedeutet, dass auch bei einer automatischen Generierung einer Benutzeroberfläche manuelle Nacharbeiten regelmäßig zu tätigen sind. Darüber hinaus ist es üblich, nach Eingriffen in eine Projektierung einer Automatisierungsanordnung zumindest in den Fällen, in denen Komponenten hinzugefügt, entfernt oder funktional anders angeordnet wurden, die graphische Benutzeroberfläche für Bedien- und Beobachtungsgeräte neu zu erstellen, wodurch auch der zuvor diskutierte manuelle Aufwand erneut zu bewerkstelligen ist. Dies betrifft hauptsächlich die Konfigurierung von Anzeigeseiten, Graphiken, Texten, Beschriftungen, Verbindungen, Alarmen, Verzeichnissen etc.

Es ist also eine Aufgabe der vorliegenden Erfindung, die Erstellung von Benutzeroberflächen von Bedien- und Beobachtungsgeräten zu vereinfachen, insbesondere die notwendigen manuellen Eingriffe zu verringern.

Ein Kerngedanke der erfindungsgemäßen Lösung dieser Aufgabe beruht dabei auf der Erkenntnis, dass im Zuge der Entwicklung einer Automatisierungsanordnung und der dabei erforderlichen häufigen Neu-Erstellung der graphischen Benutzeroberflächen der Bedien- und Beobachtungsgeräte häufig dieselben Objekte wiederholt manuell bearbeitet werden müssen. Erfindungsgemäß sollen diese manuellen Eingriffe objektbezogen gespeichert werden, so dass bei einer wiederholten Generierung einer Benutzeroberfläche die bereits früher bearbeiteten Objekte aufgefunden werden können, wobei die daran vorgenommenen Änderungen automatisch wieder vorgenommen werden sollen. Automatisch generierte Teile einer Benutzeroberfläche sollen mit manuell erzeugten oder manuell bearbeiteten Teilen zusammengeführt bzw. verschmolzen werden, wobei vorteilhafter Weise ein Regelwerk angegeben wird, welches definiert, in welcher Weise diese Zusammenführung oder Verschmelzung geschehen soll.

Die Aufgabe wird insbesondere durch das Verfahren gemäß dem Patentanspruch 1 und durch den Editor gemäß dem Patentanspruch 5 gelöst.

Dabei wird ein Verfahren zur Erstellung einer Benutzeroberfläche eines Bedien- und Beobachtungsgerätes einer industriellen Automatisierungsanordnung vorgeschlagen, wobei in einem ersten Schritt aus Projektierungsdaten der Automatisierungsanordnung automatisch Objekte für das Bedienen und Beobachten der Automatisierungsanordnung ausgewählt und auf einer Anzeigeseite der Benutzeroberfläche angeordnet werden, wobei in einem zweiten Schritt zumindest eines der Objekte der automatisch erzeugten Benutzeroberfläche durch eine manuelle Bedienprozedur bearbeitet wird, wobei Attribute des zumindest einen Objektes verändert werden. Dabei werden im Zuge einer erneuten Erstellung der Benutzeroberfläche in einem dritten Schritt aus aktualisierten Projektierungsdaten automatisch erneut Objekte für die Benutzeroberfläche ausgewählt, wobei in einem vierten Schritt dasjenige oder diejenigen der neuen Objekte identifiziert wird bzw. werden, welches dem im zweiten Schritt bearbeiteten zumindest einen Objekt entspricht, wobei in einem fünften Schritt die in dem zweiten Schritt veränderten Attribute auf das im vierten Schritt identifizierte Objekt angewendet wird, und wobei die Benutzeroberfläche mit diesem Objekt unter Berücksichtigung der veränderten Attribute neu erstellt wird. Dadurch ist es möglich, die bei einer früheren Konfigurierung der Benutzeroberfläche manuell vorgenommenen Änderungen mit einer neu automatisch erstellten Konfigurierung der Benutzeroberfläche zu verbinden, wodurch manueller Aufwand gespart wird, eine Standardisierung der Benutzeroberflächen unterstützt wird, und somit Aufwand und Kosten bei der Generierung der Benutzeroberflächen reduziert werden.

Die Lösung der Aufgabe sieht außerdem einen Editor zur Erstellung einer Benutzeroberfläche eines Bedien- und Beobachtungsgerätes einer industriellen Automatisierungsanordnung vor, wobei der Editor zur automatischen Auswahl von Objekten für das Bedienen und Beobachten der Automatisierungsanordnung anhand der Projektierungsdaten der Automatisierungsanordnung in einem ersten Schritt eingerichtet ist, wobei der Editor weiter zur automatischen Anordnung der Objekte auf einer Anzeigeseite der Benutzeroberfläche eingerichtet ist, wobei der Editor zur Eingabe und Anwendung manueller Bedienprozeduren in einem zweiten Schritt eingerichtet ist, wobei die manuelle Veränderung von Attributen zumindest eines Objektes der automatisch erzeugten Benutzeroberfläche vorgesehen ist. Dabei ist der Editor im Zuge einer erneuten Erstellung der Benutzeroberfläche zur automatischen Auswahl neuer Objekte anhand aktualisierter Projektierungsdaten in einem dritten Schritt eingerichtet, wobei der Editor zur Identifizierung eines der neuen Objekte in einem vierten Schritt eingerichtet ist, wobei die Identifizierung desjenigen Objektes vorgesehen ist, welches dem im zweiten Schritt bearbeiteten zumindest einem Objekt entspricht, wobei der Editor zur Anwendung der in dem zweiten Schritt veränderten Attribute (z.B. Position oder Größe) auf das in dem vierten Schritt identifizierten Objekt in einem fünften Schritt eingerichtet ist, und wobei der Editor zur Erstellung der Benutzeroberfläche mit diesem Objekt unter Berücksichtigung der veränderten Attribute eingerichtet ist. Durch einen solchen Editor können die im Zusammenhang mit dem Verfahren diskutierten Vorteile erzielt werden.

Vorteilhafte Ausgestaltungen der Erfindung sind in den abhängigen Patentansprüchen angegeben. Die dabei beschriebenen Merkmale und Vorteile können sowohl einzeln, als auch in Kombination miteinander realisiert werden.

Vorteilhaft wird für die Identifizierung der bereits bei einer vorangegangenen Erstellung der Benutzeroberfläche bearbeiteten Objekte und für die Zuordnung der dabei veränderten Attribute zu den neu aufgefundenen, identifizierten Objekten ein Regelwerk eingerichtet und beachtet, wobei dieses Regelwerk aus festgelegten Regeln bestehen kann, die global oder lokal beeinflussbar oder editierbar sind, und die beispielsweise auf den Typ eines Objekts, auf den Typ eines Gerätes, auf den Typ einer Aufgabe oder dgl. bezogen sein können. Alternativ können die Regeln des Regelwerks auch bereits in der Software des Editors codiert sein, dann sind diese durch einen Benutzer nicht mehr manipulierbar. Auch Mischformen sind möglich. Ein anderes Regelwerk kann die Generierung der Objekte aus den Projektierungsdaten im ersten Verfahrensschritt steuern; ein solches Regelwerk soll aber nicht mit demjenigen in der hier diskutierten Ausgestaltung verwechselt werden und ist nicht zentraler Gegenstand der vorliegenden Erfindung.

Vorteilhaft beziehen sich die Attribute auf die Platzierung eines Objektes auf der Anzeigeseite einer Benutzeroberfläche, wobei vorteilhaft zu der Platzierung auch eine Größenanpassung des darzustellenden Objektes, eine Beschriftung/Beschreibung, eine Farbgebung und weitere visuelle Anpassungen gehören können. Die Attribute können jedoch auch die Verschaltung bzw. Wechselwirkung mit anderen Objekten betreffen, also auch einen Informationsfluss oder eine Abhängigkeit beschreiben.

Eine weitere vorteilhafte Ausgestaltung besteht darin, dass auch eine Information gespeichert wird, wenn ein Objekt manuell einer Benutzeroberfläche hinzugefügt wird und/oder ein automatisch generiertes Objekt manuell von der Benutzeroberfläche entfernt wird. Auch solche Bedienaktionen können bei einer nachfolgenden automatischen Generierung einer Benutzeroberfläche automatisch wieder nachvollzogen werden. Die Entscheidung darüber, ob und in welcher Weise hinzugefügte oder entfernte Objekte berücksichtigt werden sollen, können ebenfalls mit dem Regelwerk festgelegt werden. Selbiges gilt für die Fälle, in denen einer Benutzeroberfläche Anzeigeseiten hinzugefügt oder von dieser entfernt wurden.

Die Identifizierung der Objekte geschieht vorteilhaft anhand interner Identifizierungsnummern, sog. "Objekt-ID's". In den Fällen, in denen sich solche Identifizierungsnummern im Zuge einer weiteren Projektierung bzw. einer Bearbeitung der Projektierung der Automatisierungsanordnung ändern können (z.B. beim Löschen und Neu-Anlegen eines Quellobjektes), kann vorteilhaft auch eine (ggf. ergänzende) Identifizierung anhand anderer Eigenschaften, z.B. Namen oder Pfad-Informationen, oder auch anhand von Ähnlichkeitsmerkmalen erfolgen, d.h., dass aus der Summe der Eigenschaften eines Objektes oder einer zugrundeliegenden Instanz der Projektierung ein Identitätswert gebildet wird, beispielsweise ein "Hash-Wert" oder ein "Finger Print", wobei nach einer erneuten automatischen Erstellung der Benutzeroberfläche nach ähnlichen Identitätswerten gesucht wird.

Ein Ausführungsbeispiel des erfindungsgemäßen Verfahrens wird nachfolgend anhand der Zeichnungen erläutert. Dieses Beispiel dient gleichzeitig der Erläuterung eines erfindungsgemäßen Editors.

Dabei zeigt die einzige Figur in schematischer Darstellung zwei aufeinander folgende Generierungen einer Benutzeroberfläche.

In der Figur sind zwei teil-automatische bzw. automatische Durchläufe dargestellt, wobei jeweils schematisch und stark vereinfacht eine Generierung einer graphischen Benutzeroberfläche einer industriellen Automatisierungsanordnung bzw. eines Bedien- und Beobachtungsgerätes einer industriellen Automatisierungsanordnung zu sehen ist.

Dabei wird angenommen, dass die graphische Benutzeroberfläche im Zuge der Projektierung der industriellen Automatisierungsanordnung aus den Projektierungsdaten in einem ersten Teilschritt automatisch erzeugt wird, wonach bei einer ersten Erzeugung der Benutzeroberfläche aus der automatisch generierten Benutzeroberfläche AG1 mittels einer manuellen Bearbeitung MB die tatsächlich zu verwendende Benutzeroberfläche BO1 erstellt wird; dies ist im linken Teil der Figur zu sehen. Der rechte Teil der Figur, der später erläutert wird, zeigt einen nachfolgenden Generierungs-Lauf, der beispielsweise auf Grundlage geänderter Projektierungsdaten durchgeführt wird.

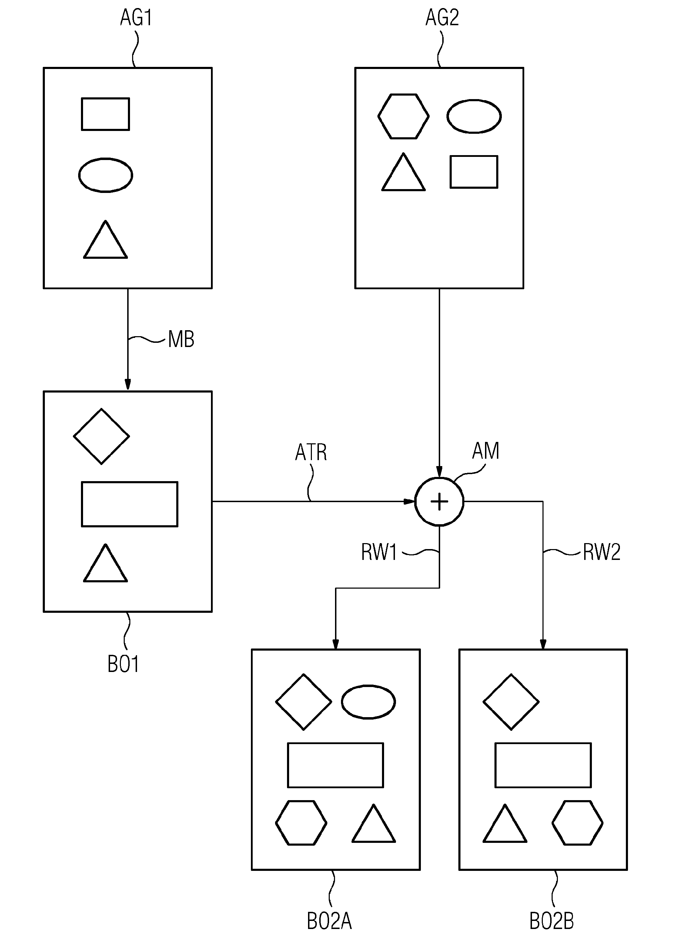

Bei der automatischen Generierung der Benutzeroberfläche werden zahlreiche Objekte für die spätere Visualisierung bestimmt und aus einer Bibliothek oder dgl. abgerufen. Dies können beispielsweise Anzeigemittel für Temperaturen, Flüssigkeitspegel oder dgl. sein, Anzeigeobjekte für Maschinen oder Anlagenteile, Eingabemittel oder Betätigungsmittel zur manuellen Beeinflussung des zu steuernden Prozesses oder der zu steuernden Automatisierung etc. In der Figur 1 sind diese Objekte der Benutzeroberfläche durch geometrische Formen, beispielsweise Rechtecke, Ellipsen, Dreiecke oder dgl., symbolisch dargestellt worden. Dabei weist die in einem ersten Durchlauf erzeugte automatisch generierte Benutzeroberfläche AG1 drei Objekte auf, wobei auf einer Anzeigeseite links oben ein Rechteck dargestellt ist, links Mitte eine Ellipse, und links unten ein Dreieck. Diese automatisch erzeugte Benutzeroberfläche AG1 wird in einem manuellen Bedienschritt MB durch einen Benutzer angepasst. Im konkreten Fall wurde das durch das Rechtecksymbol visualisierte Objekt in die Mitte verschoben und vergrößert, das durch die Ellipse visualisierte Objekt wurde entfernt, das durch das Dreieck visualisierte Objekt wurde an seinem Ort belassen. Damit wurden für das durch das Rechteck visualisierte Objekt sowohl die Attribute, die die Lage auf der Anzeigeseite bestimmen, als auch das Attribut, welches die Vergrößerung angibt, bearbeitet. Für das Objekt "Ellipse" wurde das Attribut "Sichtbarkeit" zu "False" verändert, dieses Objekt wurde also von der Benutzeroberfläche entfernt bzw. auf "unsichtbar" verändert. Ferner wurde ein weiteres Objekt hinzugefügt, welches in der Figur 1 als "Raute" dargestellt wurde; diesem Objekt wurde gleichzeitig als Attribut für die Position der Wert "links oben" zugewiesen. Alle diese bei der manuellen Bearbeitung MB vorgenommenen Änderungen der Attribute sind in einer gesonderten Datenbank des Editors, mit dem diese manuelle Bearbeitung MB durchgeführt wurde, gespeichert. Alternativ können diese Daten auch der Projektierungsdatenbank hinzugefügt werden, oder es kann auch eine andere Speichermöglichkeit genutzt werden.

Nun sei angenommen, dass die Projektierungsdatenbank bzw. die darin gespeicherte Projektierung der industriellen Automatisierungsanordnung geändert wurde, z.B. weil das entsprechende "Projekt" bearbeitet wurde. Damit sei es als notwendig erachtet, die Benutzeroberfläche des Bedien- und Beobachtungsgerätes neu zu erstellen. Analog zu der bereits geschilderten Vorgehensweise wird erneut eine automatische Generierung vorgenommen, die zu der automatisch generierten Benutzeroberfläche AG2 führt. Dort sind exemplarisch dieselben Objekte zu sehen, wie bereits auf der Benutzeroberfläche AG1, wobei jedoch ein weiteres Objekt "Sechseck" hinzugefügt wurde. Außerdem sind die bereits bekannten Objekte anders angeordnet, als beim vorhergehenden Durchlauf. Der Editor erkennt nun, dass es sich bei der Benutzeroberfläche AG2 um eine automatisch erzeugte Benutzeroberfläche desselben Projektes handelt, zu der bereits vorher eine Benutzeroberfläche AG1 automatisch erstellt wurde, und wobei in einem manuellen Bearbeitungsschritt eine optimierte Benutzeroberfläche BO1 erstellt worden ist.

An dieser Stelle kann optional ein Abfrageschritt erfolgen, wobei ein Benutzer gefragt wird, ob und wie eine automatische Optimierung der automatisch erzeugten Benutzeroberfläche AG2 auf Grundlage bisheriger Angaben erfolgen soll, oder nicht. Im Folgenden sei angenommen, dass der Editor aufgefordert worden ist, die automatisch generierte Benutzeroberfläche AG2 automatisch zu optimieren. In einem weiteren optionalen Schritt kann dabei abgefragt werden, welches Regelwerk verwendet werden soll, wobei im Beispiel der Figur ein Benutzer die Auswahl zwischen den Regelwerken RW1 und RW2 hat. In der Figur sind dabei die Resultate beider Optionen dargestellt.

In dem jetzt anstehenden Verarbeitungsschritt AM ("Automatic Merge") werden nun die Daten, die aus der automatischen Generierung und somit der Benutzeroberfläche AG2 stammen, mit den Verarbeitungsergebnissen des ersten Durchlaufs kombiniert, wobei mittels eines Attribute-Transfers ATR im Wesentlichen die Resultate der manuellen Bearbeitung MB in den Bearbeitungsschritt AM einfließen.

Im Weiteren soll zunächst erläutert werden, wie mittels des Regelwerks RW1 die optimierte Benutzeroberfläche BO2A erzeugt wird. Der Editor greift dabei zunächst auf die automatisch generierte Benutzeroberfläche AG2 bzw. deren Daten zu, wobei festgestellt wird, dass das Element "Sechseck" im ersten Generierungslauf noch unbekannt war. Gemäß des Regelwerks RW1 sollen neue Objekte in die neue Benutzeroberfläche BO2A übernommen werden, so dass das Objekt "Sechseck" dort visualisiert wird. Das nächste Objekt sei das Objekt "Ellipse". Auch hier sagt das Regelwerk RW1, dass solche Objekte, die zwar bei der manuellen Bearbeitung MB entfernt wurden, jedoch bei einer neuen automatischen Generierung wieder aufgefunden werden, auf die Benutzeroberfläche BO2A übernommen werden sollen. Im Gegensatz dazu besagt das Regelwerk RW2, dass solche Objekte, die bereits aus einer vorherigen Benutzeroberfläche BO1 bzw. AG1 entfernt wurden, nicht wieder visualisiert werden sollen. Daher zeigt die alternative Benutzeroberfläche BO2B die Ellipse nicht.

Das nächste zu verarbeitende Objekt ist das Objekt, welches mit einem "Dreieck" visualisiert wird. Dieses wurde bei der manuellen Bearbeitung MB im ersten Durchlauf nicht verändert, so dass gemäß beider Regelwerke RW1, RW2 dieses Objekt weiter zu visualisieren ist.

Das Objekt, welches als "Rechteck" auf der automatisch erzeugten Benutzeroberfläche AG2 zu sehen ist, wurde während des ersten Durchlaufs sowohl in seiner Größe verändert, als auch verschoben. Aus diesem Grund wird gemäß beider Regelwerke RW1, RW2 das Rechteck erneut vergrößert in der Mitte der Benutzeroberflächen BO2A, BO2B dargestellt.

Nun sind alle Objekte der Benutzeroberfläche AG2 verarbeitet; aus dem automatischen Attribute-Transfer ATR geht jedoch hervor, dass ein Objekt, nämlich das als "Raute" visualisierte Objekt, manuell der Benutzeroberfläche BO1 hinzugefügt wurde, und zwar links oben. Aus diesem Grund wird gemäß beider Regelwerke RW1, RW2 das Objekt "Raute" links oben eingefügt und alle anderen Objekte werden entsprechend verschoben, mit Ausnahme des vergrößert dargestellten "Rechtecks", welches aufgrund seiner manuellen Platzierung im ersten Durchgang an dieser Stelle der Benutzeroberflächen BO2A, BO2B fest verankert ist.

In der Figur sind aus Gründen der Übersichtlichkeit keine Beziehungen, Verbindungen und Beschriftungen etc. dargestellt und behandelt worden. Ebenso ist aus Gründen der Vereinfachung ein Beispiel mit nur einer einzigen Anzeigeseite gewählt worden. Selbstverständlich können in einer realen Anordnung jedoch alle diese komplexeren Fälle erfindungsgemäß berücksichtigt werden.

## Patentansprüche

1. Verfahren zur Erstellung einer Benutzeroberfläche (BO1, BO2A, BO2B) eines Bedien- und Beobachtungsgerätes einer industriellen Automatisierungsanordnung,
wobei
- in einem ersten Schritt aus Projektierungsdaten der Automatisierungsanordnung automatisch Objekte für das Bedienen und Beobachten der Automatisierungsanordnung ausgewählt und auf einer Anzeigeseite der Benutzeroberfläche angeordnet werden,
- wobei in einem zweiten Schritt zumindest eines der Objekte der automatisch erzeugten Benutzeroberfläche (AG1) durch eine manuelle Bedienprozedur (MB) bearbeitet wird, wobei Attribute des zumindest einen Objektes verändert werden,
**dadurch gekennzeichnet,**
**dass** im Zuge einer erneuten Erstellung der Benutzeroberfläche (BO1, BO2A, BO2B)
- in einem dritten Schritt aus aktualisierten Projektierungsdaten automatisch neue Objekte ausgewählt werden,
- in einem vierten Schritt dasjenige der neuen Objekte identifiziert wird, welches dem im zweiten Schritt bearbeiteten zumindest einen Objekt entspricht,
- in einem fünften Schritt die in dem zweiten Schritt veränderten Attribute auf das im vierten Schritt identifizierte Objekt angewendet wird, und
**dass** die Benutzeroberfläche (BO2A, BO2B) mit diesem Objekt unter Berücksichtigung der veränderten Attribute neu erstellt wird.

2. Verfahren nach Patentanspruch 1,
**dadurch gekennzeichnet,**
**dass** für die Identifizierung in dem vierten Schritt und für die Zuordnung der veränderten Attribute in dem fünften Schritt ein Regelwerk (RW1, RW2) ausgewertet wird.

3. Verfahren nach einem der vorhergehenden Patentansprüche,
**dadurch gekennzeichnet,**
**dass** die Attribute die Platzierung des Objektes auf der Anzeigeseite der Benutzeroberfläche (BO1, BO2A, BO2B) betreffen.

4. Verfahren nach einem der vorhergehenden Patentansprüche,
**dadurch gekennzeichnet,**
**dass** in dem zweiten Schritt ein weiteres Objekt manuell der Benutzeroberfläche (BO1) hinzugefügt wird, wobei in dem vierten Schritt dieses weitere Objekt automatisch der neu erstellten Benutzeroberfläche (BO2A, BO2B) hinzugefügt wird.

5. Editor zur Erstellung einer Benutzeroberfläche (BO2A, BO2B) eines Bedien- und Beobachtungsgerätes einer industriellen Automatisierungsanordnung,
wobei der Editor zur automatischen Auswahl von Objekten für das Bedienen und Beobachten der Automatisierungsanordnung anhand der Projektierungsdaten der Automatisierungsanordnung in einem ersten Schritt eingerichtet ist, wobei der Editor weiter zur automatischen Anordnung der Objekte auf einer Anzeigeseite der Benutzeroberfläche eingerichtet ist, und
wobei der Editor zur Eingabe und Anwendung manueller Bedienprozeduren (MBI) in einem zweiten Schritt eingerichtet ist, wobei die manuelle Veränderung von Attributen zumindest eines Objektes der automatisch erzeugten Benutzeroberfläche (AG1) vorgesehen ist,
**dadurch gekennzeichnet,**
**dass** der Editor im Zuge einer erneuten Erstellung der Benutzeroberfläche (BO2A, BO2B)
- zur automatischen Auswahl neuer Objekte aus aktualisierten Projektierungsdaten in einem dritten Schritt eingerichtet ist,
- **dass** der Editor zur Identifizierung eines der neuen Objekte in einem vierten Schritt eingerichtet ist, wobei die Identifizierung desjenigen Objektes vorgesehen ist, welches dem im zweiten Schritt bearbeiteten zumindest einem Objekt entspricht,
- **dass** der Editor zur Anwendung der in dem zweiten Schritt veränderten Attribute auf das in dem vierten Schritt identifizierten Objekt in einem fünften Schritt eingerichtet ist,
und
- **dass** der Editor zur Erstellung der Benutzeroberfläche (BO2A, BO2B) mit diesem Objekt unter Berücksichtigung der veränderten Attribute eingerichtet ist.

6. Editor nach Patentanspruch 5,
**dadurch gekennzeichnet,**
**dass** der Editor zur Anwendung eines Regelwerks (RW1, RW2) bei der Durchführung des vierten und des fünften Schrittes eingerichtet ist.

7. Editor nach Patentanspruch 5 oder 6,
**dadurch gekennzeichnet,**
**dass** die Attribute die Platzierung des Objektes auf der Anzeigeseite der Benutzeroberfläche (BO1, BO2A, BO2B) betreffen.

8. Editor nach einem der Patentansprüche 5 bis 7,
**dadurch gekennzeichnet,**
**dass** der Editor zur Bereitstellung einer Benutzeroberfläche zur Hinzufügung eines weiteren Objektes zu der Benutzeroberfläche (BO1) eingerichtet ist, wobei der Editor dazu eingerichtet ist, dieses weitere Objekt in dem vierten Schritt automatisch der erneut zu erstellenden Benutzeroberfläche (BO2B, BO2B) hinzuzufügen.
